# EUROPEAN PATENT SPECIFICATION

(11) **EP 0 702 993 B1**
(45) Date of publication and mention of the grant of the patent: **10.11.1999**
(21) Application number: 95106672.9
(22) Date of filing: 03.05.1995
(51) Int. Cl.: B01D 35/06, B03C 1/02

(54) **Fluid filter using magnet means**
Flüssigkeitfilter mit Magnet
Filtre pour liquides avec aimant

(30) Priority: 23.09.1994 CN 94221510
(43) Date of publication of application: 27.03.1996
(73) Proprietor: Chen, Chin-Chuan, Sec. 5 Taipei (TW); Lee, Kai-Yuan, Sec. 2, Taipei (TW)
(72) Inventor: Chen, Chin-Chuan, Sec. 5, Taipei (TW)
(74) Representative: Grünecker, Kinkeldey, Stockmair & Schwanhäusser Anwaltssozietät

(56) References cited:
- US-A- 3 887 469
- US-A- 4 036 758
- US-A- 4 839 041
- US-A- 5 228 990

## Description

The present invention relates generally to a fluid filter using magnet to remove ferrous metal particles carried by the fluid flow and in particular to an oil filter for use with an automobile engine.

Oil has been a must for lubrication and cooling of an internal combustion engine. The quality of the oil plays an important roll for the service life and the operation of the engine. Besides the quality of the oil, particles, especially metallic particle (basically ferrous metal particles), which are generated during the operation of the engine are also a factor that affects the service life of the engine. These metal particles are destructive to the engine, for they circulate with the oil to the moving parts of the engine and cause wearing and abrasion on the moving parts which in turn generate more ferrous metal particles. To overcome such a problem, an oil filter is devised to filter and clean the oil. The oil filter has been well known and being improved for may years. In general, an oil filter comprises a canister housing inside which filtering means, such as filtering paper or other porous material which allows the oil to flow through but stops the ferrous metal particles and thus cleans the oil. An example is disclosed in Taiwan patent publication No. 170,160.

Oil filters of this structure have been a standard for many years. However, due to the requirement of the minimum flow rate of the oil for lubrication and cooling of the engine, this oil filter structure is incapable to filter out minute particles, for it must have large enough openings to establish the required oil flow rate.

To overcome such a problem, magnet means has been disposed inside the oil filter to attract and thus remove the minute ferrous metal particles out of the oil flow. Some examples of the magnetic oil filters are demonstrated in US patent Nos. 4,450,075, 4,613,435, 4,826,592, 4,851,116, 5,078,871 and 5,228,990 and Taiwan patent publication Nos. 165,334, 181,638 (which is corresponding to US patent No. 5,228,990) and 195,840. All these patents comprise magnet means in different forms disposed inside the oil filter canister for removing ferrous metal particle out of oil flow within the canister.

Although the conventional magnetic oil filters mentioned above do work well in removing minute metal particles from the oil flow, they have at least one major problem, namely, these oil filters comprise no metal particle collection means to allow the particles to be collected and securely held. Without the particle collection means, the ferrous metal particles that are attracted by the magnet means will gather around the magnet means and held thereon only by the magnetic force. The gathering of the metal particles may form a blockage to the oil flow.

Furthermore, since the metal particles are only held by the magnetic force and since the magnetic force to some extent may be overcome by the vibration and shake of the engine or the automobile on which the engine is mounted during their operations, the ferrous metal particles that are attracted around the magnet means may re-enter the oil flow. This reduces the effectiveness of the conventional magnetic oil filters.

An even more serious problem caused by the metal particles that are shaken to release from the magnet means and re-enter the oil flow is that these particles may be magnetized to some degree by the magnet means during their contact engagement with the magnet means and thus in their recirculation within the engine, they may attract each other and form a large particle which causes a more serious damage to the engine if allowed to circulate with the oil flow.

Moreover, in some of the conventional magnetic oil filters, such as US patent No. 5,228,990 comprising the features of the preamble part of claim 1, the magnet means is fixed inside the canister by means of adhesive. Due to the high temperature condition during the normal operation of the engine, the oil flow that is thus maintained in a substantial high temperature deteriorates the adhesive and thus may cause failure of the adhesive. The failure of the adhesive results in un-securing the magnet means and thus damaging the oil filter. In certain conditions, the inn-secured magnet means may also block the oil outlet and this causes an even more dangerous problem to the operation of the engine.

In some other magnetic oil filters, the magnetic means and the related parts are held inside the filter canister by means of frictional force provided by elastic deformation of the parts. However, due to the fact that to avoid unnecessary magnetization of the parts, some of the parts are made of aluminum which, as is generally well known, is less flexible and thus may not be able to provide desired elastic deformation for the provision of frictional force to hold the parts in position. As a result, the vibration and shake of the engine and/or the automobile may cause the magnet means and the related parts to disengage and thus damage the function of the oil filter.

It is therefore an object of the present invention to provide a fluid filter according to which metal particles are collected and securely held to prevent the ferrous metal particle from re-entering the fluid flow and to prevent these particles from piling up to form the blockage to the fluid flow whereby simultaneously the filter has a simple structure and is thus an inexpensible cost.

This object is solved by a fluid filter according to claim 1 with the additional features of the characterising part of this claim.

Further features of advantageous embodiments are disclosed by the subclaims.

The present invention will be better understood from the following description of a preferred embodiment of the present invention, with reference to the attached drawings, wherein:
Fig. 1 is a perspective view of an oil filter constructed in accordance with a first embodiment of the present invention, partially broken to show the inside structure thereof, the oil filter being particularly suitable for gasoline engine;
Fig. 2 is a perspective view showing magnetic filtering means constructed in accordance with the present invention and adapted to be used in the oil filter of Fig. 1;
Fig. 3 is an exploded perspective view, showing the magnetic filtering means of Fig. 2;
Fig. 4 is a cross-sectional view, showing the magnetic filtering means of Fig. 2;
Fig. 5 is a perspective view, showing a top member of the magnetic filtering means;
Fig. 6 is a perspective view, showing a particle collection member of the magnetic filtering means; and
Fig. 7 is a perspective view, showing a base member of the magnetic filtering means.
Fig. 8 is a cross-sectional view showing a second embodiment of the oil filter in accordance with the present invention, particularly suitable for diesel engine, which comprises two sets of magnetic filtering means mounted within the housing of the oil filter in a top-to-top manner.

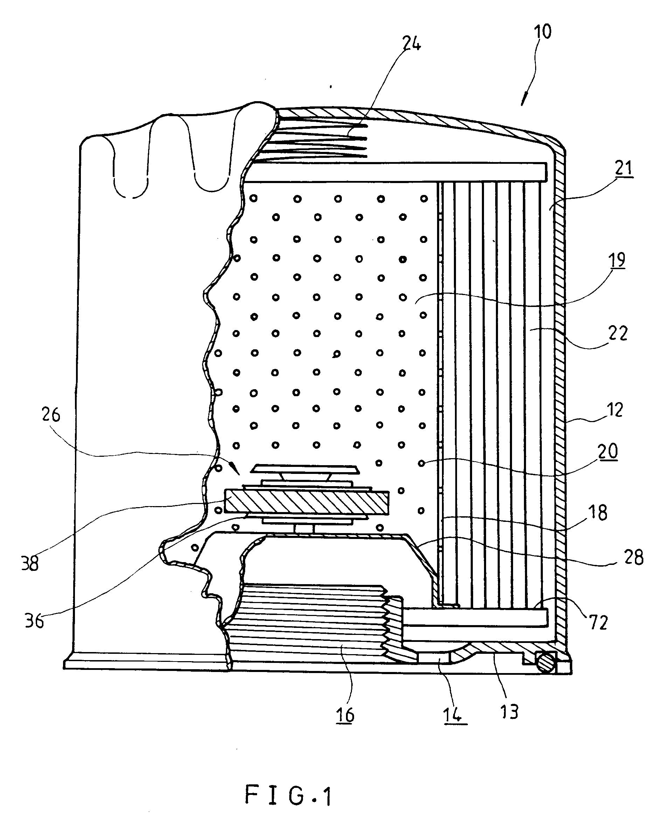

With reference to the drawings and in particular to Fig. 1, wherein an oil filter constructed in accordance with a first embodiment of the present invention, generally designated with the reference numeral 10, is shown, the oil filter 10 comprises a housing 12 having a bottom 13 on which an oil outlet 16, preferably centrally located, is formed with a plurality of oil inlets 14 among which only one is shown in the drawings, formed around the central outlet 16. In general, the outlet 16 is inner-threaded to be engageable to an engine (not shown). The oil flows into the oil filter 10 via the inlets 14, circulates through the oil filter 10 and then exits the oil filter 10 via the outlet 16 to return back to the engine.

The oil filter 10 comprises a foraminated sleeve 18, having formed thereon a plurality of apertures 20, preferably in a uniformly distributed manner, disposed inside the housing 12 to define a first space 19 of a first diameter encircled by the foraminated sleeve 18. The centrally located oil outlet 16 is thus located within the first space 19 and enclosed by the foraminated sleeve 18 preferably in a substantially separated manner. The foraminated sleeve 18 is disposed to be separated from the housing 12 so as to define therebetween a second, cylindrical space 21 within which a filter material, such as multiple-folded filtering paper core 22 as conventionally used, is disposed. A spring 24 is disposed on a top side of the filtering paper core 22 to bias both the filtering paper core 22 and the foraminated sleeve 18 toward the bottom 13 of the housing 12 so as to secure the foraminated sleeve 18 and the filtering paper core 22 in position as is conventionally known.

Inside the first space 19 defined by the foraminated sleeve 18, magnetic filtering means constructed in accordance with the present invention, generally designated with the reference 26 are mounted.

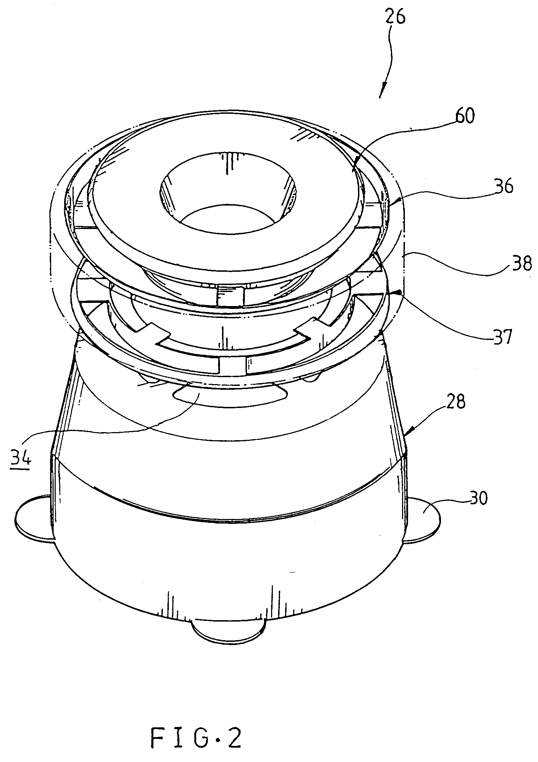

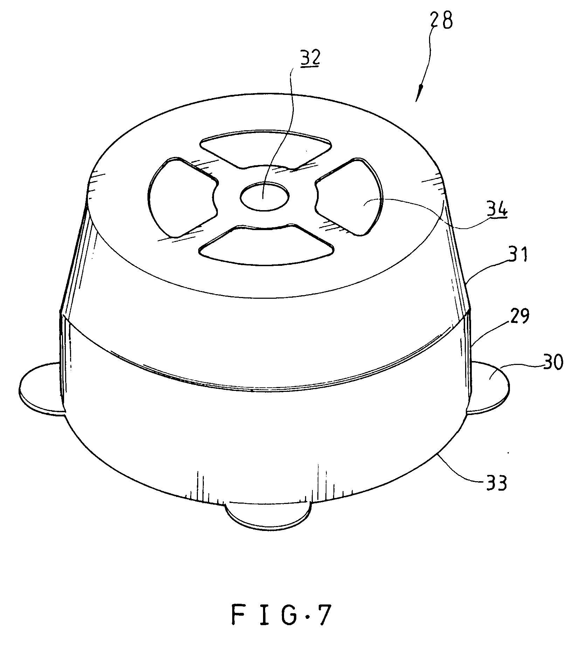

The magnetic filtering means 26, as shown in Figs. 2-4, which are respectively a perspective view, an exploded perspective view and a cross-sectional view of the magnetic filtering means 26, comprises a base 28, which is particularly shown in Fig. 7 as a hollow shell member, having a generally cylindrical lower portion 29 and a truncated-conic upper portion 31 integrally formed as a unitary member that has an open, large diameter bottom side and a closed, reduced diameter top side. The diameter of the cylinder 29 of the base 28 is substantially equal to the first diameter of the first space 19 defined by the foraminated sleeve 18 so as to allow the cylinder 29 of the base 20 to be forcibly fit into the foraminated sleeve 18 and thus secured therein. This arrangement allows the base 28 to completely cover the outlet 16 formed on the bottom 13 of the housing 12 with the open, bottom side thereof.

Preferably, the cylinder 29 of the base 28 comprises a plurality of radial tabs 30 which extend radially outward from a lower circumference 33 of the cylinder of the base 28 to insert into between the foraminated sleeve 18 and a fixed surface 72 (Fig. 1) mounted to or forming a portion of the bottom 13 of the housing 12 to be further secured in position by being nipped between the foraminated sleeve 18 and the bottom 13 of the housing 12 under the action of the biasing spring 24.

The base 28 also comprises a central hole 32 formed on the top side thereof with a plurality of fan- or sector-shaped slots 34, serving as oil passages, formed around the central hole 32. As is apparent to those having ordinary skills, the oil passages 34 may assume any other shapes without departing from the scope of the invention. The oil passages 34 allow the oil to flow into the base 28 and then discharge via the outlet 16 enclosed within the base 28.

In the embodiment illustrated, the base 28 is preferably made of thin steel plate of 0.3 mm thickness. The diameter of the cylinder 29 of the base 28 is about 32 mm and that of the top side is about 27 mm. The overall height of the base 28 is approximately 18 mm. The diameter of the central hole 32 may be 3.6 mm. This is only an example of the detailed dimension of the base 28 and it is quite obviously that the base 28 may be modified to give different dimension for use in oil filters having different designs and sizes.

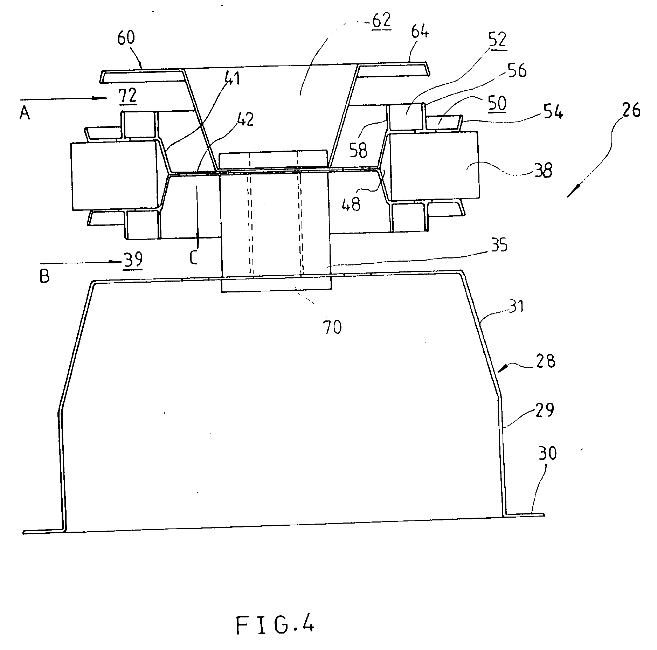

On the top side of the base 28, an elongated spacer 35, preferably in the form of a long cylinder as shown in the drawings, is fixed to support thereon a pair of oppositely arranged particle collection members, the upper member 36 and the lower member 37, between which magnet means 38 is retained. The spacer 35 serves to separate the lower particle collection member 37 away from the base 28 by a predetermined distance, such as 5 mm, so as to define a lower oil path 39 therebetween, as illustrated in Figure 4.

The upper particle collection member 36 is identical to the lower particle collection member 37 and the only difference is that the lower member 37 is disposed in an upside-down manner relative to the upper member 36. Thus, the description herein regarding the upper particle collection member 36 is also applicable to the lower particle collection member 37.

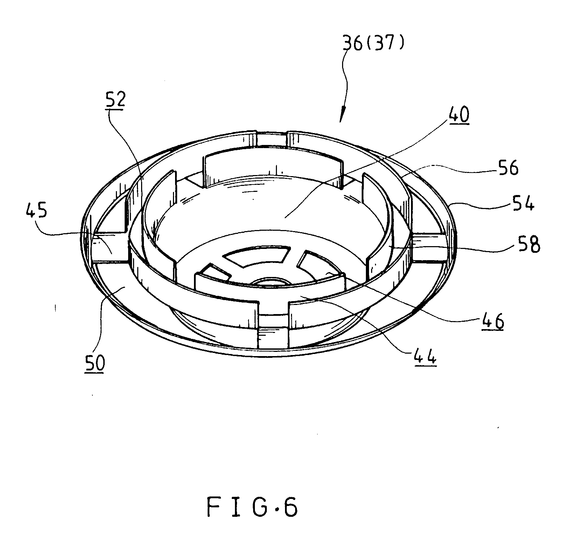

The structure of the particle collection members 36 and 37 is particularly shown in Fig. 6. As shown, the particle collection member 36 or 37 comprises a pan-shaped body made of a thin metal plate, preferably a ferrous metal, having a central recess 40 with a circumferential flange 45 integrally formed around the recess 40. The recess 40 is defined by an inclined side wall 41 and a substantially flat bottom wall 42. A central hole 44 is formed on the bottom wall 42, opposing the central hole 32 formed on the tap side of the base 28. A plurality of slots 46 in the form of fan or sector are formed around the central hole 44 to provide an oil passage to be described hereinafter.

By having the lower member 37 oriented up side down and having the flat bottoms 42 of the recesses 40 of the upper and lower particle collection members 36 and 37 contacting and resting upon each other, a ring space 48 (see Fig. 4) is formed between the flanges 45 of the upper and lower members 36 and 37, which surrounds the inclined side walls 41 of the upper and lower particle collection members 36 and 37, to receive and hold therein the magnet means 38. Using ferromagnetic metal, such as steel, to manufacture the upper and lower particle collection members 36 and 37 allows the magnetic flux of the magnet means 38 to be directed to desired locations and orientations. The use of steel plate to form the upper and lower particle collection members 36 and 37 also provides suitable resiliency of the flanges 45 to securely hold the magnet means 38 therebetween. The upper and lower particle collection members 36 and 37 may also be manufactured with other materials which satisfy the requirement set forth herein, such as steel nets or screens or holed steel plates.

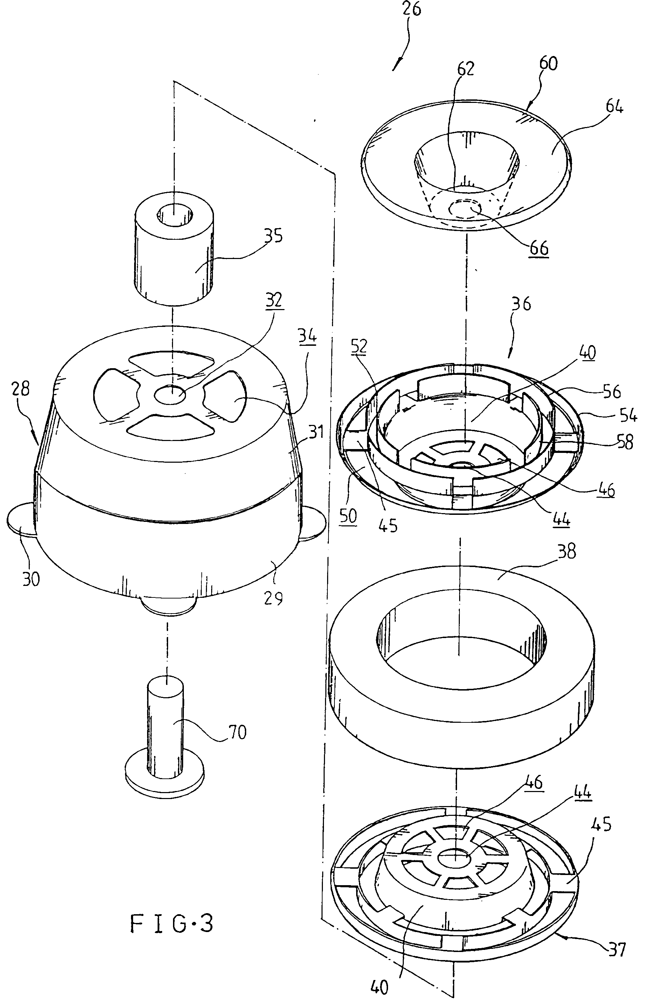

As shown in Figs. 3, 4 and 6, each of the particle collection members 36 and 37 comprises particle collection channels 50 and 52 formed on the flange 45 thereof. The particle collection channels 50 and 52 are defined by a plurality of upright cylindrical strips 54, 56 and 58. The outer strip 54 may be formed by bending the outer circumference of the flange 45 upward. The middle strip 56 and the inner strip 58 may be formed by cutting the plate material of the flange 45 in such a manner to allow the cut material to connect to the remaining material of the flange 45 along an edge thereof and then bending the cut material upward. Preferably, the middle and inner strips 56 and 58 are formed to have substantially the same height and the outer strip 54 has a less height. The outer and middle strips 54 and 56 together define the outer collection channel 50 therebetween and the middle and inner strips 56 and 58 together define the inner collection channel 52 therebetween. Preferably, the outer strip 54 is formed in a slightly upward diverging manner to incline outward.

Alternatively, the strips 54, 56 and 58 may be formed by separate material and then fixed to the flange 45 of the particle collection member 36 or 37 by means of, for example, welding or soldering. However, this alternative requires additional material and thus increases overall weight and cost.

The magnet means 38 is so disposed between the flanges 45 of the upper and lower particle collection members 36 and 37 as to have the magnetic poles thereof located in the proximity of the particle collection channels 50 and 52 of both the upper and lower particle collection members 36 and 37. This allows the ferrous metal particles to be attracted and collected within the particle collection channels 50 and 52 by the most powerful magnetic force that can by supplied by the magnet means 38.

In an embodiment of the present invention, the particle collection members 36 and 37 may be manufactured from steel plate of 0.3 mm thickness. The overall diameter of the particle collection members 36 and 37 is about 27 mm and that of the recess 40 is approximately 16.5 mm. The central hole 44 is about 3.6 mm in diameter.

Unlike the conventional structure disclosed in, for example, US patent No. 5,228,990 which requires the size of the magnets to be limited within a strict range, the structure of the present invention allows the size of the magnet means 38 to be varied in a wider range so that the magnet means 38 may comprise only a single large magnet in the form of a ring, as shown in the drawings. In accordance with the present invention, the magnet means 38 that is adapted by the present invention may generate a magnetic field that is as strong as 1,100 Gauss which may apply an attraction force of 180 grams to the ferrous metal particles. As compared to the 800 Gauss magnetic field that is used in some of the conventional devices, the present invention obviously provides a better ferrous metal particle removal rate than the conventional devices.

Although it is shown in the drawings, that the magnet means 38 comprises only a single large magnet, it is also possible to use a number of small magnets disposed in the ring space 48 around the recesses 40 of the upper and lower particle collection members 36 and 37. Quite obviously, there are other different magnet means can be used to replace the one described in the preferred embodiment and shown in the drawings without departing from the spirit and scope of the present invention.

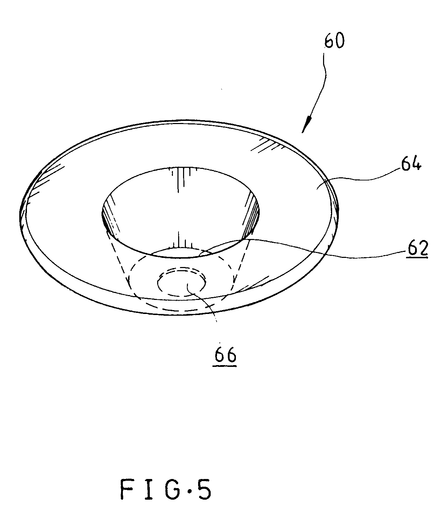

The magnetic filtering means 26 also comprises a top member 60, preferably in the form of a circular pan as that shown in Fig. 5, having a central recess 62 with a circumferential flange 64 mounted to and surrounding the recess 62. The central recess 62 is defined by a substantially flat bottom surrounded by an upward diverging side wall, the circumferential flange 64 being attached to the diverging sidewall. The top member 60 comprises a central hole 66 formed on the bottom of the recess 62, opposing the central hole 44 of the upper particle collection member 36. A fastener, such as rivet 70 (see Figs. 3 and 4), extending in sequence through the central hole 32 of the base 28, the spacer 35, the central holes 44 of the upper and lower particle collection members 36 and 37 and finally the central hole 66 of the top member 60 to secure all these member together to form the magnetic filtering means 26. The magnet means 38 is retained between the upper and lower particle collection members 36 and 37 by their being secured together by the fastener 70.

To avoid inn-desired attraction to the ferrous metal particles by the fastener 70 and the top member 60 which interferes with the collection of the ferrous metal particles within the particle collection channels 50 and 52, the fastener 70 and the top member 60 are preferably made of a non-magnetized or non-ferromagnetic material, such as aluminum. Also, the spacer 35 is preferably made of a non-ferromagnetic material, such as aluminum.

The recess 62 of the top member 60 has such a depth that when the recess 62 is secured within the recess 40 of the upper particle collection member 36 by the fastener 70, the circumferential flange 64 thereof is spaced from the circumferential flange 45 of the upper particle collection member 36 by a pre-determined distance, such as 5 mm, and the diverging side wall of the central recess 62 of the top member 60 is also spaced from the inclined side wall 41 of the recess 40 of the upper particle collection member 36 by a predetermined distance, such as 3.5 mm, so as to define an upper oil path 72 between the top member 60 and the upper particle collection member 36.

In operation, the oil that contains ferrous metal particles is conducted to flow through both the upper path 72 above the upper particle collection member 36, as indicated by arrow A of Fig. 4, and the lower path 39 below the lower particle collection member 37, as indicated by arrow B of Fig. 4. Both these two paths 72 and 39 bring the oil through nearby the particle collection channels 50 and 52 of the upper and lower particle collection members 36 and 37. As mentioned previously, the magnetic poles of the magnet means 38 are located in the close proximity of the particle collection channels 50 and 52 and thus the ferrous metal particles that are carried by the oil flow will be attracted and collected in the particle collection channels 50 and 52. The oil that flows through the upper path 72 is further conducted to pass through the passages formed by the slots 46 of the upper and lower particle collection members 36 and 37, as indicated by arrow C of Fig. 4 to join the oil flow through the lower path 39. All the oil will flow into the base 28 through the slots 34 formed on the top side of the base 28 to exit the oil filter 10 through the outlet 16.

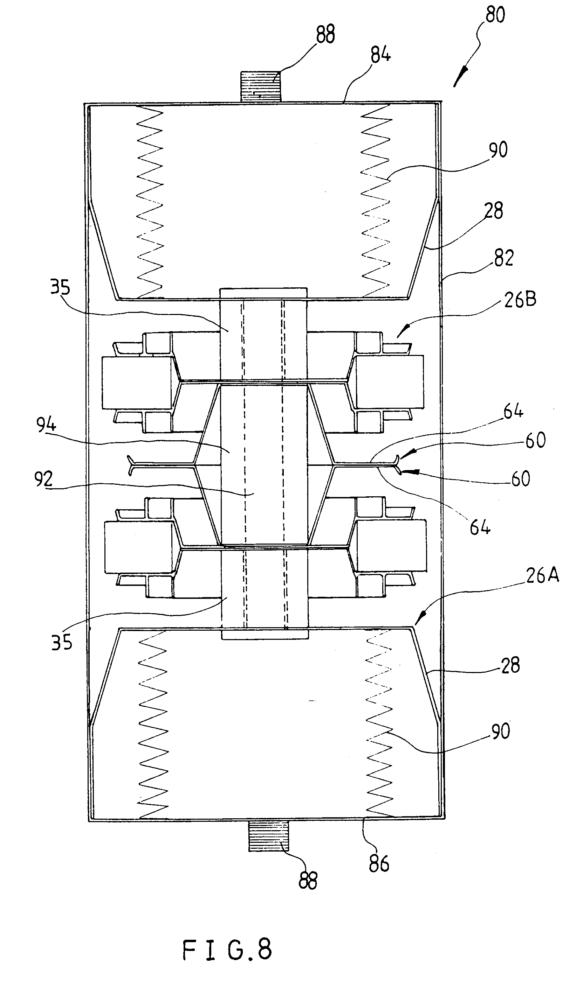

A second embodiment of the oil filter in accordance with the present invention, which is particularly suitable for use in a diesel engine (not shown) is shown in Fig. 8 and is designated with the reference numeral 80 in the drawing. In Fig. 8, parts similar to those illustrated in Figs. 1-7 bear the same reference numerals. The oil filter 80 comprises a hollow housing 82 which is in general longer but thinner than the housing 12 of the oil filter 10 of the first embodiment due to differences in specification between the diesel engine and the gasoline engine. The oil filter 80 comprises two sets of magnetic filtering means 26, which will be referred to as 26A and 26B for distinguish, disposed inside the housing 80 in a top-to-top manner, namely the first magnetic filtering means 26A is mounted within the housing 80 in a manner similar to that shown in Fig. 1, while the second magnetic filtering means 26B is disposed within the housing 80 in an up-side-down manner to have the circumferential flange 64 of the top member 60 of the second magnetic filtering means 26B facing and supported on the circumferential flange 64 of the top member 60 of the first magnetic filtering means 26A, as shown in Fig. 8. The two magnetic filtering means 26A and 26B are generally the same as that shown in Figs. 2-4, with only the radial tabs 33 formed on the lower circumference 30 of the base 28 removed. This will be further discussed hereinafter.

To be accommodated within a diesel engine, the housing 82 of the diesel engine oil filter 80 of the present invention comprises a top end 84 and a bottom end 86, each having a threaded section 88 of reduced diameter to engagingly secure to the diesel engine. This is well known and thus no further detail is needed herein. Each of the first and second magnetic filtering means 26A and 26B has resilient retaining means, which comprises springs 90 as shown in Fig. 8, disposed within the base 28 thereof to act against the bottom end 86 of the housing 80 (for the first magnetic filtering means 26A) or the top end 84 of the housing 80 (for the second magnetic filtering means 26A). The spring forces provided by the springs 90 allow the two magnetic filtering means 26A and 26B to be securely held within the housing 82.

The diesel engine oil filter 80, due to its slenderer configuration, has no interior space to accommodate the foraminated sleeve and the filtering paper core, respectively designated with reference numerals 18 and 22 in Fig. 1, used in the first embodiment of the present invention which is particularly suitable for a gasoline engine. Due to the same reason, the base 28 of each of the first and second magnetic filtering means 26A and 26B comprises no tabs 30 extending from the lower circumference 33 of the base 28. Instead of fixing the magnetic filtering means 26A or 26B within the housing 82 by means of sandwiching the tabs 30 between the foraminated sleeve and the housing as that is illustrated in Fig. 1, the cylindrical lower portion 29 of the base 30 is so dimensioned as to tightly fit within the housing 82, as shown in Fig. 8. By means of both actions provided by the springs 90 and the tight fitting between the housing 82 and the bases 30 of the magnetic filtering means 26A and 26B, the magnetic filtering means 26A and 26B are securely held within the housing 82.

To provide an integrated structure, a second spacer 94 is interposed between the top members 60 of the first and second magnetic filtering means 26A and 26B with a single fastener 92, which replaces the individual fastener 70 shown in the first embodiment (see Figs. 3 and 4) of the present invention, extending from the base 28 of the first magnetic filtering means 26A through the spacers 35 and the second spacer 94 and into the base 28 of the second magnetic filtering means 26B to hold the first and second magnetic filtering means 26A and 26B together as a single unit.

It is apparent that although the invention has been described in connection with the preferred embodiment, it is contemplated that those skilled in the art may make changes to the preferred embodiment without departing from the scope of the invention as defined in the appended claims.

## Claims

1. A fluid filter (10, 80) comprising a housing (12, 82) having fluid inlet (14) and outlet (16) to allow a fluid to be filtered that carries ferrous metal particles to flow into and out of the fluid filter, the housing (12, 82) defining therein an interior space (19, 21) for receiving therein magnetic filtering means (26, 26A, 26B), wherein the magnet filtering means comprises at least one filtering structure (28, 26; 28, 26A, 26B), **characterized by**
said filtering structure including
a base (28) comprising a hollow shell body (29, 31) having an open bottom end having a diameter receivable within the housing (12, 82) and a top end having a reduced diameter, said base being secured within the interior space (19) of the housing by base securing means (30), the base comprising first fluid passage means (34) formed in the top end thereof for the fluid communication to an interior space defined by the hollow shell body (29, 31);
particle collection means (36, 37) fixed to the top end of the base member, the particle collection means comprising an upper member (36) and a lower member (37) each being formed by a plate material having a central recess (40) with a circumferential flange (45) connected to and surrounding an outer circumference thereof, the recess (40) of each of the upper and lower member (36, 37) comprising a substantially flat bottom (42) and a surrounding side wall (41) to which the circumferential flange (45) is connected, each flat bottom (42) having a plurality of slots (46) formed therein, the upper and lower members (36, 37) being so arranged that the lower member (37) is disposed upside down relative to the upper member (36) with the bottoms (42) of the recesses (40) in contact engagement with each other to define a ring space (48) around the recesses (40), and between the flanges (45) of the upper and lower members (36, 37), the upper member (36) being located away from the base (28) and the lower member (37) being located to be facing but spaced from the top end of the base (28) to define a lower fluid path (39) therebetween, cylindrical strips (56, 58) being formed on the circumferential flanges (45) of the respective member (36, 37) and surrounding the respective recess so as to define therebetween a plurality of particle collection channels (50, 52), the slots (46) formed in the bottom (42) of the recesses (40) being opposed to each other so as to define a second fluid passage means within the recesses (40);
a magnet means (38) of ring-shape received and held in the ring space (48) of the particle collection means (36, 37) with magnetic poles located in close proximity to the particle collection channels (50, 52);
a top member (60) being fixed to the upper member (36) defining an upper fluid path (72) therebetween and conducting a portion of the fluid to be filtered also to flow through nearby the particle collection channels (50, 52) of the upper particle collection member (36) and further to pass the second fluid passage means (40) in direction to the top end of the base (28), and
the lower fluid path (39) conducting another portion of the fluid to be filtered also to flow through nearby the particle collection channels (50, 52) formed on the lower particle collection member (37) and to join the fluid flowing from the upper fluid path and the second fluid passage means (40) to enter the interior space of the base (28) via the first fluid passage means (34).

2. The fluid filter as claimed in Claim **1**, further comprising a foraminated sleeve (18) in the form of a cylinder disposed within the housing (12) to divide the interior space of the housing into a first space (19) which is enclosed by the foraminated sleeve (18) and a second space (21) between the foraminated sleeve (18) and the housing (12) with the magnetic filtering means (26) located within the first space (19), the second space (21) having porous filtering means (22) disposed therein to surround the foraminated sleeve.

3. The fluid filter as claimed in Claim **2**, wherein the base body (28) comprises a cylindrical lower portion (29) which is forcibly fit in the foraminated sleeve (18) to secure the base inside the housing (12), the base securing means further comprising a plurality of radial tabs (30) extending outward from a lower circumference (33) of the cylindrical lower (29) portion to be located below the foraminated sleeve (18) and thus held by friction therebetween.

4. The fluid filter as claimed in Claim **3**, wherein the base securing means comprises soldering the tabs (30) to the sleeve (18).

5. The fluid filter as claimed in Claim **1**, wherein the magnetic filtering means (26) comprises a first filtering structure (26A) and a second filtering structure (26B) which are disposed in such a manner that the second filtering structure (26B) is orientated up-side-down relative to the first filtering structure (26A) so as to have the top member (36) of the second filtering structure (26B) facing and supported on the top member (36) of the first filtering structure (26A).

6. The fluid filter as claimed in Claim **5**, wherein the base securing means comprises a cylindrical lower portion (29) formed on the base (28) of each of the first and second filtering structure (26A, 26B) which is forcibly fit within the housing (82).

7. The fluid filter as claimed in Claim **1**, wherein the magnetic filtering means (26) further comprises a fastener (70) which extends through the top end of the base (28), the recesses (40) of the upper and lower particle collection members (36, 37) and the top member (60) to secure these members together.

8. The fluid filter as claimed in Claim **7**, wherein the fastener (70) comprises a rivet.

9. The fluid filter as claimed in one of the previous Claims, wherein each of the upper and lower particle collection members (36, 37) comprises an inner, a middle and an outer cylindrical strips (58, 56, 54) to define an inner particle collection channel (52) with the inner and middle strips (58, 56) and an outer particle collection channel (50) with the middle and outer strips (56, 54).

10. The fluid filter as claimed in Claim **9**, wherein the inner cylindrical strip (58) has a height substantially equal to height of the middle cylindrical strip (56) and greater than height of the outer strip (54).

11. The fluid filter as claimed in Claim **9**, wherein the inner and middle cylindrical strips (58, 56) of each of the particle collection members (36, 37) are formed by cutting a portion of the plate material of the respective particle collection member with an edge connecting to the remaining of the plate material and bending the cut portion relative to the remaining plate material.

12. The fluid filter as claimed in Claim **9**, wherein the outer cylindrical strip (54) is formed by bending an outermost circumference of the circumferential flange.

13. The fluid filter as claimed in Claim **1**, wherein the magnet means (38) comprises a ring magnet receivable within the ring space (48) with the magnetic poles thereof located in the close proximity of the particle collection channels (50, 52) of the upper and lower particle collection members (36, 37).

14. The fluid filter as claimed in Claim **1**, wherein the upper and lower particle collection members (36, 37) are made of a ferromagnetic material.

15. The fluid filter as claimed in Claim **14**, wherein the ferromagnetic material comprises steel.

16. The fluid filter as claimed in Claim **1**, wherein the top member (60) is made of a non-ferromagnetic material.

17. The fluid filter as claimed in Claim **16**, wherein the non-ferromagnetic material comprises aluminum.

18. The fluid filter as claimed in Claim **7**, wherein the fastener (70) is made of a non-ferromagnetic material.

19. The fluid filter as claimed in Claim **18**, wherein the non-ferromagnetic material comprises aluminum.

20. The fluid filter as claimed in Claim **1**, wherein a spacer (35) is disposed between the top end of the base (28) and the lower particle collection member (37).

21. The fluid filter as claimed in Claim **20**, wherein the spacer (35) is made of a non-ferromagnetic material.

22. The fluid filter as claimed in Claim **21**, wherein the non-ferromagnetic material comprises aluminum.

23. The fluid filter as claimed in Claim **1**, wherein the fluid to be filtered comprises engine oil.

## Patentansprüche

1. Fluidfilter (10, 80) mit einem Gehäuse (12, 82), welches einen Fluideinlaß (14) und einen Fluidauslaß (16) aufweist, durch die ein zu filterndes, Eisenmetallpartikel enthaltenes Fluid in den und aus dem Filter fließt, wobei das Gehäuse (12, 82) einen Innenraum (19, 21) zur Aufnahme einer magnetischen Filtereinrichtung (26, 26A, 26B) aufweist, welche wenigstens eine Filterstruktur (28, 26; 28, 26A, 26B) umfaßt,
**dadurch gekennzeichnet,**
daß die Filterstruktur aufweist:
eine Basis (28) mit einem hohen Hülsenkörper (29, 31) mit einem offenen unteren Ende, dessen Durchmesser innerhalb des Gehäuses (12, 82) aufnehmbar ist, und einem oberen Ende von kleinerem Durchmesser, wobei die Basis (28) im Innenraum (19) des Gehäuses mit Basisbefestigungseinrichtungen (30) gesichert ist und die Basis einen ersten Fluiddurchlaß (34) im oberen Ende zur Fluidverbindung zu einem durch den hohlen Hülsenkörper gebildeten Innenraum aufweist;
eine Partikelsammeleinrichtung (36, 37), die am oberen Ende der Basis befestigt ist, aus einem oberen Bauteil (36) und einem unteren Bauteil (37), die beide aus einem Plattenmaterial gebildet sind und eine zentrale Aussparung (40) mit einem Ringflansch (45) aufweisen, welcher Ringflansch mit einem äußeren Umfang der Aussparung verbunden ist und diese umgibt, wobei die Aussparung (40) des oberen und unteren Bauteils (36, 37) einen im wesentlichen flachen Boden (42) und eine umlaufende Seitenwand (41) aufweist, mit welcher der Ringflansch (45) verbunden ist, wobei jeder flache Boden (42) eine Vielzahl von darin gebildeten Schlitzen (46) aufweist, die oberen und unteren Bauteile (36, 37) so angeordnet sind, daß das untere Bauteil (37) gegenüber dem oberen Bauteil (36) umgekehrt angeordnet ist und die Böden (42) der Aussparungen (40) miteinander zur Bestimmung eines Ringraums (48) um die Ausnehmungen (40) und zwischen den Flanschen (45) des oberen und unteren Bauteils (36, 37) in Kontakt stehen, wobei das obere Baute (36) von der Basis abgewandt ist und das untere Bauteil (37) beabstandet dem oberen Ende der Basis (28) zugewandt ist, um einen unteren Fluidweg (39) dazwischen zu bestimmen, wobei zylindrische Streifen (56, 58) auf den Ringflanschen (45) der entsprechenden Bauteile (36, 37) gebildet sind und die entsprechende Ausnehmung so umgeben, daß dazwischen eine Vielzahl von Partikelsammelkanälen (50, 52) gebildet sind, und die Schlitze (46) im Boden (42) der Ausnehmung (40) einander so gegenüberliegen, daß ein zweiter Fluiddurchlaß innerhalb der Ausnehmungen (40) gebildet ist;
eine ringförmige Magneteinrichtung (38), die im Ringraum (48) der Partikelsammeleinrichtung (36, 37) aufgenommen und gehalten ist, wobei magnetische Pole in enger Nachbarschaft zu den Partikelsammelkanälen (50, 52) angeordnet sind, und
ein Kopfbauteil (60) befestigt am oberen Baute (36) zur Bestimmung eines oberen Fluidweges (72) dazwischen und zur Führung eines Teils des zu filternden Fluids auch in die Nähe der Partikelsammelkanäle (50, 52) des oberen Partikelsammelbauteils (36) und zur weiteren Führung des zweiten Fluiddurchlasses (40) in Richtung des oberen Endes der Basis (28), wobei der untere Fluidweg (39) einen weiteren Teil des zu filternden Fluids auch in die Nähe der am unteren Partikelsammelbauteil (37) gebildeten Partikelsammelkanälen (50, 52) leitet und mit dem durch den oberen Fluidweg und den zweiten Fluiddurchlaß (40) fließenden Fluid vereint, um in den Innenraum der Basis (28) über den ersten Fluiddurchlaß (34) einzutreten.

2. Fluidfilter nach Anspruch 1,
**dadurch gekennzeichnet,**
daß im Gehäuse (12) eine perforierte Hülse (18) in Form eines Zylinders angeordnet ist, um den Gehäuseinnenraum in einen ersten von der perforierten Hülse (18) umschlossenen Raum (19) und einen zweiten Raum (21) zwischen der perforierten Hülse (18) und dem Gehäuse (12) zu unterteilen, wobei die erste magnetische Filtervorrichtung (26) im ersten Raum (19) angeordnet ist und der zweite Raum (21) eine poröse, die perforierte Hülse umgebende Filtervorrichtung (22) aufweist.

3. Fluidfilter nach Anspruch 2,
**dadurch gekennzeichnet,**
daß der Basiskörper (28) ein zylindrisches Unterteil (29) aufweist, das kraftschlüssig in die perforierte Hülse (18) einpaßbar ist und die Basis im Gehäuse (12) sichert, wobei die Basisbefestigungseinrichtung weiterhin eine Vielzahl von radialen Laschen (30) aufweist, die auswärts von einem unteren Umfang (33) des zylindrischen Unterteils (29) vorstehen, um unterhalb der perforierten Hülse (18) angeordnet und dazwischen reibschlüssig gehalten zu sein.

4. Fluidfilter nach Anspruch 3,
**dadurch gekennzeichnet,**
daß die Laschen (30) der Basisbefestigungseinrichtung an der Hülse (18) angelötet sind.

5. Fluidfilter nach Anspruch 1,
**dadurch gekennzeichnet,**
daß die magnetische Filtereinrichtung (36) eine erste und zweite Filterstruktur (26A, 26B) aufweist, welche so angeordnet sind, daß die zweite Filterstruktur (26B) umgekehrt zur ersten Filterstruktur (26A) angeordnet ist, wodurch das obere Baute (36) der zweiten Filterstruktur (26B) dem oberen Bauteil (36) der ersten Filterstruktur (36A) zugewandt und von diesem getragen ist.

6. Fluidfilter nach Anspruch 5,
**dadurch gekennzeichnet,**
daß die Basisbefestigungseinrichtung ein an der Basis (28) sowohl der ersten als auch zweiten Filterstruktur (26A, 26B) gebildetes, zylindrisches Unterteil (29) aufweist, das kraftschlüssig in das Gehäuse (82) eingepaßt ist.

7. Fluidfilter nach Anspruch 1,
**dadurch gekennzeichnet,**
daß die magnetische Filtereinrichtung (26) eine Befestigungseinrichtung (70) aufweist, die sich durch das obere Ende der Basis (38), die Ausnehmungen (40) der oberen und unteren Partikelsammelbauteile (36, 37) und das obere Bauteil (60) zu deren Zusammenhalten erstreckt.

8. Fluidfilter nach Anspruch 7,
**dadurch gekennzeichnet,**
daß die Befestigungseinrichtung (70) einen Niet aufweist.

9. Fluidfilter nach einem der vorangehenden Ansprüche,
**dadurch gekennzeichnet,**
daß jedes der oberen und unteren Partikelsammelbauteile (36, 37) einen inneren, mittleren und äußeren zylindrischen Streifen (58, 56, 54) aufweist, wobei jeweils die inneren und mittleren Streifen einen inneren Partikelsammelkanal (52) und die mittleren und äußeren Streifen einen äußeren Partikelsammelkanal (50) bilden.

10. Fluidfilter nach Anspruch 9,
**dadurch gekennzeichnet,**
daß der innere zylindrische Streifen (58) eine Höhe im wesentlichen gleich zur Höhe des mittleren zylindrischen Streifens (36) und größer als die Höhe des äußeren Streifens (54) aufweist.

11. Fluidfilter nach Anspruch 9,
**dadurch gekennzeichnet,**
daß die inneren und mittleren zylindrischen Streifen (58, 56) jedes Partikelsammelbauteils (36, 37) durch Ausschneiden eines Teils des Plattenmaterials des entsprechenden Partikelsammelbauteils geformt sind mit einer Kante in Verbindung mit dem ungeschnitten Teil des Plattenmaterials und unter Umbiegen des geschnittenen Teils relativ zum verbleibenden Plattenmaterial.

12. Fluidfilter nach Anspruch 9,
**dadurch gekennzeichnet,**
daß der äußere zylindrische Streifen (54) durch Biegen des äußersten Randes auf den Ringflansch gebildet ist.

13. Fluidfilter nach Anspruch 1,
**dadurch gekennzeichnet,**
daß die Magneteinrichtung (38) einen Ringmagneten aufweist, der im Ringraum (48) aufnehmbar ist, wobei dessen Magnetpole in enger Nachbarschaft zu den Partikelsammelkanälen (50, 52) der oberen und unteren Partikelsammelbauteile (36, 37) angeordnet ist.

14. Fluidfilter nach Anspruch 1,
**dadurch gekennzeichnet,**
daß obere und untere Partikelsammelbauteile (36, 37) aus einem ferromagnetischen Material gebildet sind.

15. Fluidfilter nach Anspruch 14,
**dadurch gekennzeichnet,**
daß das ferromagnetische Material Stahl aufweist.

16. Fluidfilter nach Anspruch 1,
**dadurch gekennzeichnet,**
daß das obere Bauteil (60) aus einem nicht-ferromagnetischen Material gebildet ist.

17. Fluidfilter nach Anspruch 16,
**dadurch gekennzeichnet,**
daß das nicht-ferromagnetische Material Aluminium enthält.

18. Fluidfilter nach Anspruch 7,
**dadurch gekennzeichnet,**
daß die Befestigungseinrichtung (70) aus einem nicht-ferromagnetischen Material gebildet ist.

19. Fluidfilter nach Anspruch 18,
**dadurch gekennzeichnet,**
daß das nicht-ferromagnetische Material Aluminium enthält.

20. Fluidfilter nach Anspruch 1,
**dadurch gekennzeichnet,**
daß eine Abstandseinrichtung (35) zwischen dem oberen Ende der Basis (28) und dem unteren Partikelsammelbauteil (37) angeordnet ist.

21. Fluidfilter nach Anspruch 20,
**dadurch gekennzeichnet,**
daß die Abstandseinrichtung (35) aus einem nicht-ferromagnetischen Material gebildet ist.

22. Fluidfilter nach Anspruch 21,
**dadurch gekennzeichnet,**
daß das nicht-ferromagnetische Material Aluminium enthält.

23. Fluidfilter nach Anspruch 1,
**dadurch gekennzeichnet,**
daß das zu filternde Fluid Motoröl enthält.

## Revendications

1. Un filtre de fluide (10, 80) comprenant un boîtier (12, 82) comportant une entrée (14) et une sortie (16) permettant à un fluide à filtrer qui transporte des particules de métal ferreux de circuler à travers le filtre, le boîtier (12, 82) définissant en cela un espace intérieur (19, 21) servant à recevoir un moyen de filtration magnétique (26, 26A, 26B), dans lequel le moyen de filtration magnétique comprend au moins un assemblage filtrant (28, 26; 28, 26A, 26B), **caractérisé par**
ledit assemblage filtrant incluant
une base (28) comprenant un corps cylindrique creux (29, 31) ayant une extrémité inférieure ouverte dont le diamètre est recevable à l'intérieur du boîtier (12, 82) et une extrémité supérieure ayant un diamètre réduit, ladite base étant assujettie dans l'espace intérieur (19) du boîtier par le moyen d'assujettissement (30) de la base, celle-ci comprenant le premier moyen de passage (34) du fluide formé dans son extrémité supérieure et permettant à celui-ci de pénétrer dans un espace intérieur défini par le corps cylindrique creux (29, 31);
un moyen de collecte de particules (36, 37) fixé à l'extrémité supérieure de la base, moyen comprenant un élément supérieur (36) et un élément inférieur (37), chacun étant formé par une plaque comportant un évidement central (40) doté d'une bride circonférentielle (45) connectée à et entourant sa circonférence extérieure, l'évidement (40) de chacun des éléments supérieur et inférieur (36, 37) comprenant un fond (42) essentiellement plat et une paroi (41) périphérique à laquelle la bride circonférentielle (45) est connectée, chaque fond plat (42) comportant une pluralité de fentes (46) formées en cela, les éléments supérieur et inférieur (36, 37) étant disposés de telle façon que l'élément inférieur (37) se trouve inversé par rapport à l'élément supérieur (36) et que les fonds (42) des évidements (40) sont en contact l'un avec l'autre de manière à définir un espace annulaire (48) autour des évidements (40) et entre les brides (45) des éléments supérieur et inférieur (36, 37), l'élément supérieur (36) se trouvant éloigné de la base (28) et l'élément inférieur (37) étant situé de manière à faire face à l'extrémité supérieure de la base (28) et à en être espacé de façon à définir un circuit de fluide inférieur (39) entre l'élément et la base, des bandes cylindriques (56, 58) étant formées sur les brides circonférentielles (45) de l'élément respectif (36, 37) et entourant l'évidement respectif de manière à définir entre les bandes et les évidements une pluralité de rainures de collecte de particules (50, 52), les fentes (46) formées dans le fond (42) des évidements (40) étant opposées les unes aux autres de façon à définir un second moyen de passage du fluide à l'intérieur des évidements (40);
un aimant (38) annulaire reçu et maintenu en place dans l'espace annulaire (48) du moyen de collecte de particules (36, 37), et dont les pôles magnétiques se trouvent tout près des voies de collecte de particules (50, 52);
un élément de dessus (60) étant fixé à l'élément supérieur (36) et définissant un circuit de fluide supérieur (72) entre les deux éléments et menant une partie du fluide à filtrer à circuler également à proximité des rainures de collecte de particules (50, 52) de l'élément de collecte de particules supérieur (36) et à emprunter en outre le second moyen de passage du fluide (40) vers l'extrémité supérieure de la base (28); et
le circuit de fluide inférieur (39) menant une autre partie du fluide à filtrer à circuler également à proximité des rainures de collecte de particules (50, 52) formées sur le membre de collecte de particules inférieur (37) et à rejoindre le fluide s'écoulant du circuit de fluide supérieur et du second moyen de passage (40) du fluide, et à pénétrer dans l'espace intérieur de la base (28) en empruntant le premier moyen de passage (34) du fluide.

2. Le filtre de fluide décrit dans la revendication n°1, comprenant en outre une douille foraminulée (18) sous la forme d'un cylindre disposé à l'intérieur du boîtier (12) de manière à diviser l'espace intérieur du boîtier en un premier espace (19) cerné par la douille foraminulée (18) et en un second espace (21) entre la douille foraminulée (18) et le boîtier (12), le moyen de filtration magnétique (26) se trouvant à l'intérieur du premier espace (19) et le second espace (21) comportant un moyen de filtration poreux (22) disposé de manière à entourer la douille foraminulée.

3. Le filtre de fluide décrit dans la revendication n°2, dans lequel le corps (28) de la base comprend une partie inférieure cylindrique (29) qui est ajustée de façon forcée dans la douille foraminulée (18) de manière à assujettir la base à l'intérieur du boîtier (12), le moyen d'assujettissement de la base comprenant en outre une pluralité de lames radiales (30) se prolongeant vers l'extérieur à partir d'une circonférence inférieure (33) de la partie inférieure (29) cylindrique devant être située sous la douille foraminulée (18) et ainsi maintenue en place par la friction entre les éléments.

4. Le filtre de fluide décrit dans la revendication n°3, dans lequel le moyen d'assujettissement de la base comprend le brasage des lames (30) à la douille (18).

5. Le filtre de fluide décrit dans la revendication n°1, dans lequel le moyen de filtration magnétique (26) comprend un premier assemblage filtrant (26A) et un second assemblage filtrant (26B) qui sont disposés de façon telle que le second assemblage filtrant (26B) est inversé par rapport au premier assemblage filtrant (26A) de manière à ce que l'élément supérieur (36) du second assemblage filtrant (26B) fasse face à et repose sur l'élément supérieur (36) du premier assemblage filtrant (26A).

6. Le filtre de fluide décrit dans la revendication n°5, dans lequel le moyen d'assujettissement de la base comprend une partie inférieure cylindrique (29) formée sur la base (28) de chacun des premier et second assemblages filtrants (26A, 26B), laquelle est assujettie de façon forcée à l'intérieur du boîtier (82).

7. Le filtre de fluide décrit dans la revendication n°1, dans lequel le moyen de filtration magnétique (26) comprend également un dispositif de fixation (70) qui traverse l'extrémité supérieure de la base (28), les évidements (40) des éléments de collecte de particules supérieur et inférieur (36, 37) et l'élément de dessus (60) de manière à assujettir ces éléments les uns aux autres.

8. Le filtre de fluide décrit dans la réclamation n°7, dans lequel le dispositif de fixation (70) comprend un rivet.

9. Le filtre de fluide décrit dans l'une des réclamations précédentes, dans lequel chacun des éléments de collecte de particules supérieur et inférieur (36, 37) comprend des bandes cylindriques intérieure, médiane et extérieure (58, 56, 54), les bandes intérieure et médiane (58, 56) définissant une fente de collecte de particules intérieure (52) et les bandes médiane et extérieure (56, 54), une fente de collecte de particules extérieure (50).

10. Le filtre de fluide décrit dans la réclamation n°9, dans lequel la bande cylindrique intérieure (58) a une hauteur essentiellement égale à la hauteur de la bande cylindrique médiane (56) et supérieure à celle de la bande extérieure (54).

11. Le filtre de fluide décrit dans la réclamation n°9, dans lequel les bandes cylindriques intérieure et médiane (58, 56) de chacun des éléments de collecte de particules (36, 37) sont formées par le découpage d'une partie de la plaque de l'élément de collecte de particules respectif, avec un rebord raccordant au reste de la plaque, et par le pliage de la partie découpée par rapport au reste de la plaque.

12. Le filtre de fluide décrit dans la réclamation n°9, dans lequel la bande cylindrique extérieure (54) est formée par le pliage d'une circonférence à l'extérieur de la bride circonférentielle.

13. Le filtre de fluide décrit dans la réclamation n°1, dans lequel le moyen magnétique (39) comprend un aimant annulaire recevable à l'intérieur de l'espace annulaire (48) et dont les pôles magnétiques se trouvent tout près des fentes de collecte de particules (50, 52) des éléments de collecte de particules supérieur et inférieur (36, 37).

14. Le filtre de fluide décrit dans la réclamation n°1, dans lequel les éléments de collecte de particules supérieur et inférieur (36, 37) sont faits d'une substance ferromagnétique.

15. Le filtre de fluide décrit dans la réclamation n°14, dans lequel la substance ferromagnétique comprend de l'acier.

16. Le filtre de fluide décrit dans la réclamation n°1, dans lequel l'élément de dessus (60) est fait d'une substance non ferromagnétique.

17. Le filtre de fluide décrit dans la réclamation n°16, dans lequel la substance non ferromagnétique comprend de l'aluminium.

18. Le filtre de fluide décrit dans la réclamation n°7, dans lequel le dispositif de fixation (70) est fait d'une substance non ferromagnétique.

19. Le filtre de fluide décrit dans la réclamation n°18, dans lequel la substance non ferromagnétique comprend de l'aluminium.

20. Le filtre de fluide décrit dans la réclamation n°1, dans lequel une pièce d'écartement (35) est placée entre l'extrémité supérieure de la base (28) et l'élément de collecte de particules inférieur (37).

21. Le filtre de fluide décrit dans la réclamation n°20, dans lequel la pièce d'écartement (35) est faite d'une substance non ferromagnétique.

22. Le filtre de fluide décrit dans la réclamation n°21, dans lequel la substance non ferromagnétique comprend de l'aluminium.

23. Le filtre de fluide décrit dans la réclamation n°1, dans lequel le fluide à filtrer comprend de l'huile moteur.
